# EUROPEAN PATENT APPLICATION

(11) **EP 4 067 301 A1**
(43) Date of publication of application: **05.10.2022**
(21) Application number: 21165664.0
(22) Date of filing: 29.03.2021
(51) Int. Cl.: C01B 17/69, C01B 17/94, C01B 21/086, C01B 21/094, C01B 21/38, C01B 21/46

(54) **PROCESS FOR RECYCLING NITROGEN OXIDES FROM NITROSYL SULFURIC ACID TO PRODUCE CONCENTRATED OR HIGHLY CONCENTRATED NITRIC ACID AND SULFURIC ACID**

(71) Applicant: PLINKE GmbH, 61348 Bad Homburg (DE)
(72) Inventor: SCHNABEL, Kevin, 35394 Gießen (DE); HETZEL, Joachim, 61440 Oberursel (DE); HENRICH, Thomas, 60529 Frankfurt (DE)
(74) Representative: Böhm, Brigitte

(57) **Abstract**

A process for recycling of a mixed acid containing nitrosyl sulfuric acid and sulfuric acid to obtain nitric acid and sulfuric acid, the process comprising the steps of:
a) adding (i) a dilute nitric acid containing less than 70 wt.-% nitric acid to (ii) the mixed acid comprising nitrosyl sulfuric acid and sulfuric acid to effect the decomposition of the nitrosyl sulfuric acid and to obtain (iii) a liquid phase comprising a mixture of sulfuric acid and nitric acid and (iv) a gaseous phase comprising nitrogen oxides,
b) adding steam to the sulfuric acid and nitric acid-comprising liquid phase (iii) obtained in step a) to separate (v) a purified sulfuric acid, and evaporate (vi) a mixture of concentrated nitric acid and nitrogen oxides,
c) cooling the gas phase comprising the nitrogen oxides (iv) obtained in step a) and the mixture of nitric acid and nitrogen oxides (vi) obtained in step b) in order to separately obtain (vii) a purified nitric acid condensate and (viii) nitrogen oxides,
d) absorbing nitrogen oxides (viii) in water to obtain dilute nitric acid (ix),
and optionally, introducing at least part of the obtained dilute nitric acid (ix) into step a) of the process.

## Description

The present invention relates to a process for recycling of a mixed acid containing nitrosyl sulfuric acid and sulfuric acid to obtain nitric acid and sulfuric acid, and to an apparatus for performing such process.

### Background of the Invention

Sulfuric acid (H₂SO₄) can be obtained from elemental sulfur or as a by-product of other processes. The production of H₂SO₄ from waste gases of smelting, roasting or other thermal processes accounts for about 15 % of the world production [1]. Despite of primary abatement measures, at the high temperatures of these processes, nitrogen oxides (NOx) are produced by the oxidation of atmospheric nitrogen (thermal NOx) according to reaction equations 1 and 2. In addition, nitrogen contained in fuel or raw materials may also be oxidized to nitrogen oxides.

*N*₂ + *O*₂ → 2 *NO* **(1)**

2 *NO* + *O*₂ → 2 *NO*₂ **(2)**

In the subsequent oxidation and absorption process for sulfuric acid production, nitrogen oxides (NO / NO₂) are dissolved in concentrated sulfuric acid and form stable nitrosyl sulfuric acid (HNOSO₄) according to equation 3.

*NO* + *NO*₂ + *H*₂*SO*₄ → 2 *HNOSO*₄ + *H*₂*O* **(3)**

The formation of HNOSO₄ takes place especially in sulfuric acid mists in the absorption tower of sulfuric acid plants. The resulting mixture of nitrosyl sulfuric acid, sulfuric acid and sulfur trioxide (SO₃) is usually separated in candle demisters. Depending on the design of the production plant, this mixed acid ("candle acid") is either transferred to the product acid or discharged separately [2]. Transfer to the product acid requires a denitrification of the product acid to achieve required acid qualities. If the mixed acid is discharged separately, it must be disposed of or recycled. The nitrogen content in the separately discharged mixed acid can be 20 to 40 g nitrogen/L [2, 3]. For sulfuric acid plants using waste gases with high NOx content also concentrations above 100 g nitrogen/L are possible.

It is generally known that the stability of HNOSO₄ is limited. Its decomposition (inversion of the reaction of formation, equation 3) is favored by high temperatures and dilution with water [4]. As the dilution of concentrated sulfuric acid with water releases heat, both factors are linked. Extensive decomposition is achieved by diluting to less than 60 or 70 wt.-% sulfuric acid [2, 4, 3, 4, 5]. However, the excess water needed for dilution may limit the concentration of the product sulfuric acid, if the nitrogen-depleted sulfuric acid is recycled into the production process. Furthermore, nitric acid is formed by the absorption of nitrogen oxides in the aqueous solution and contaminates the product sulfuric acid.

The decomposition of HNOSO₄ can further be promoted by oxidation with oxygen (O₂, equation 4) or reduction with sulfur dioxide (SO₂, equation 5) [3, 6].

2*HNOSO*₄ + 2*H*₂*O* + *O*₂ → 2*H*₂*SO*₄ + 2*HNO*₃ **(4)**

2*HNOSO*₄ + 2*H*₂*O* + S*O*₂ → 3*H*₂*SO*₄ + 2*NO* **(5)**

The above decomposition reactions yield (i) a mixed acid of sulfuric acid and nitric acid (equation 4) or (ii) a diluted sulfuric acid and a waste gas containing nitrogen oxide (equation 5). In order to transfer the sulfuric acid from (i) into the product acid, it is necessary to separate or reduce the nitric acid. The waste gas produced in (ii) must be treated to remove the nitrogen oxides. Catalytic or non-catalytic reduction with a reducing agent (SO₂, urea, ammonia) is essentially suitable for this purpose. If the gas components (NOx and SO₂/SO₃) are oxidized and absorbed into water a mixture of sulfuric acid and nitric acid would be formed.

A direct reduction of the nitrogen oxide content of HNOSO₄ can be achieved by adding an effective reducing agent directly to the mixed acid. However, due to the required amount of reducing agents, this direct treatment is only economically viable for low nitrogen concentrations. Suitable reducing agents are hydrazine (N₂H₂), hydroxylamine (HONH₂), hydroxalamine sulfate (HONH₂-H₂SO₄), sulfamic acid (H₂N-SO₃H) or urea (H₂N-CO₂-NH₂). [2]

Several other methods for the treatment of HNOSO₄-containing acids have already been described. US Patent 2053834 describes a process for the simultaneous production of sulfuric and nitric acid from a raw gas containing SO₂ and a raw gas containing NOₓ. In this context, the nitrogen oxides are used as catalytically active gas components similar to the lead chamber process of sulfuric acid production. In subsequent process steps, the resulting nitrosyl sulfuric acid is decomposed by the addition of water or diluted nitric acid, as well as (atmospheric) oxygen (see equation 4).

The process part for the decomposition of the nitrosyl sulfuric acid-sulfuric acid mixture and production of nitric acid requires a denitration column, a condenser and an absorption column. The mixed acid together with diluted nitric acid, steam and air is fed into the denitration column to obtain concentrated nitric acid as the overhead product. The decomposition reaction of the nitrosyl sulfuric acid is promoted by the addition of (atmospheric) oxygen. A nitrogen-depleted sulfuric acid is obtained as the bottom product, but it still contains portions of nitrogen oxides or nitrosyl sulfuric acid. This acid is recycled to sulfuric acid production. The evaporated nitric acid, together with the nitrogen oxides formed, is fed to the condenser where the concentrated nitric acid condenses and can be separated as a product. The nitrogen oxides are absorbed in water in the subsequent absorption column and the nitric acid formed is then used as a feed to the denitration column.

The process described in US2053834 is not suitable for processing the sulfuric acid containing nitrogen oxides from the candle demisters. Although the process removes a part of the nitrogen oxides from the sulfuric acid, the partially denitrated sulfuric acid still contains a significant amount of HNOSO₄. To recycle the partially denitrated sulfuric acid to the sulfuric acid production would require a further separation of the nitrogen oxides or result in a contamination of the product sulfuric acid.

US patent 2543446 describes a process for separating nitrogen oxides from a gas mixture of gaseous hydrocarbons and nitrogen oxides. For this purpose, the gas mixture flows through a primary absorption column in which the nitrogen oxides are absorbed into a sulfuric acid-nitric acid mixture (40 to 50 wt.-% sulfuric acid, 5 to 25 wt.-% nitric acid) forming HNOSO₄ according to equation 6. In a subsequent absorption-oxidation column, air or oxygen is added to the mixture to decompose the HNOSO₄ (equation 4) and oxidize the emerging nitrogen oxides to nitric acid (equation 7). Thus, a mixture of nitric and sulfuric acid is formed and subsequently separated in a rectification column.

2 *NO* + 3 *H*₂*SO*₄ + *HNO*₃ → 2 *HNOSO*₄ + 2 *H*₂*O* **(6)**

4 *NO* + 3 *O*₂ + 2 *H*₂*O* → 4 *HNO*₃ **(7)**

The process described in US2543446 is not designed for the purification of nitrogen oxide-containing sulfuric acid, but for the purification of a nitrogen oxide-containing gas. The sulfuric acid, which serves as an absorbent, must contain 5 to 25 wt.-% nitric acid. Thus, a recycling of this mixed acid into a sulfuric acid production is not possible without a further separation of the nitric acid. In addition, the sulfuric acid is diluted to 40 to 50 wt.-% sulfuric acid, which could negatively influence the water balance of plants for sulfuric acid production from moist waste gases.

Patent US4155989 describes a process in which a mixed acid containing more than 70 wt.-% (up to 94 wt.-%) sulfuric acid and 0.1 to 10 wt.-% nitric acid are separated. In this process, the nitric acid is reduced to sparingly soluble NO in direct contact with SO₂ according to equation 8 and stripped from the sulfuric acid with the gas stream. To increase the solubility of the SO₂ in the liquid, the reduction reaction is carried out at room temperature.

2*HNO*₃ + 3*SO*₂ + 2*H*₂*O* → 2*NO* + 3*H*₂*SO*₄ **(8)**

While US4155989 describes a process to separate nitric acid from a mixed acid with sulfuric acid and to simultaneously produce a higher concentrated sulfuric acid from SO₂, the treatment of the waste gas and nitrogen oxides is not part of the process.

WO98/002381A1 describes a process for the direct removal of nitrogen oxides from a mixture of nitrosyl sulfuric acid and sulfuric acid. The nitrosyl sulfuric acid is decomposed by diluting the mixed acid to final concentrations of 5 to 60 wt.-% (usually 35 wt.-%). Subsequently, the nitrogen oxides are eliminated by reduction with SO₂ according to equations 9 and 10.

*NO*₂ + *SO*₂ → *NO* + *SO*₃ **(9)**

2 *NO* + 2*SO*₂ → *N*₂ + 2*SO*₃ **(10)**

The process requires a mixing reactor in which the mixed acid to be treated is contacted with SO₂-saturated sulfuric acid at 5 to 60 wt.-%. The hydrolysis reaction of the nitrosyl sulfuric acid is favored by the strong dilution and high temperatures due to the heat of dilution. In a subsequent heat exchanger, the sulfuric acid is cooled and fed to a packed column. There, further decomposition of the nitrosyl sulfuric acid and reduction of the nitrogen oxides is promoted in countercurrent flow to a reaction gas containing SO₂. The waste gas from the packed column is returned to the sulfuric acid production unit in order to utilize any SO₂ still present for sulfuric acid production.

The process dilutes the mixed acid to concentrations < 60 wt.-%, which could have a negative impact on the water balance of plants producing sulfuric acid from moist waste gases containing SO₂. In addition, a significant excess of SO₂ must be provided for complete reduction of nitrogen oxides. Unreduced NOx is reintroduced with the gas stream to the sulfuric acid production, where it is reabsorbed as nitrosyl sulfuric acid. In addition, incomplete reduction of the nitrogen oxides (see equation 11) results in the formation of nitrous oxide (N₂O) as a side reaction, which is a strong greenhouse gas.

2 *NO* + *SO*₂ → *N*₂*O* + *SO*₃ **(11)**

It was an object of the present invention to provide a process for treating and recycling nitrosyl sulfuric acid/sulfuric acid mixtures, especially a mixed acid containing about 60 to 100 g N/L, by removing nitrogen oxides from the mixed acid in a cost-effective manner and to obtain sulfuric and nitric acids in high purity and concentration.

### Detailed description of the invention and of preferred embodiments

This above mentioned object was solved by providing an improved process as defined in the attached claims.

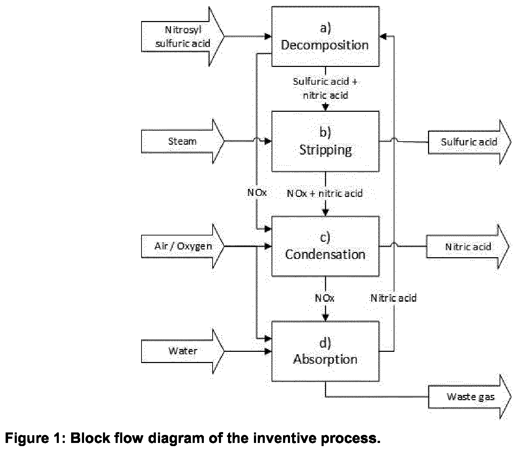

The new solution to the problem underlying the invention is based on a decomposition of the nitrosyl sulfuric acid which is contained in the mixed acid by introducing dilute nitric acid (less than 70 wt.-% and most preferably less than 60 wt.-%) and subsequent stripping of nitric acid and residual nitrogen oxides from sulfuric acid by means of steam addition. The formation of sulfuric acid and its mixture with nitric acid releases a high-concentrated nitric acid vapor (above the azeotropic point) during stripping. A nitric acid condensate and nitrogen oxides are obtained in a subsequent condensation step. Nitrogen oxides from the nitrosyl sulfuric acid are used to produce a dilute nitric acid in an (preferably medium pressure) absorption step, which in turn can be used for decomposition. The general flow diagram of the inventive process is shown in Fig. 1. Condensation can take place in two variants (A and B) depending on the desired concentration of nitric acid. The implementation of decomposition, stripping and absorption is similar in both variants.

More specifically, in this first aspect the present invention provides a process for recycling of a mixed acid containing nitrosyl sulfuric acid and sulfuric acid to obtain nitric acid and sulfuric acid, the process comprising the steps of
a) adding (i) a dilute nitric acid containing less than 70 wt.-% nitric acid (and preferably less than 60 wt.-%) to (ii) the mixed acid comprising nitrosyl sulfuric acid and sulfuric acid to effect the decomposition of the nitrosyl sulfuric acid and to obtain (iii) a liquid phase comprising a mixture of sulfuric acid and nitric acid and (iv) a gaseous phase comprising nitrogen oxides,
b) adding steam to the sulfuric acid and nitric acid-comprising liquid phase (iii) obtained in step a) to separate (v) a purified sulfuric acid, and evaporate (vi) a mixture of concentrated nitric acid and nitrogen oxides,
c) cooling the gas phase comprising the nitrogen oxides (iv) obtained in step a) and the mixture of nitric acid and nitrogen oxides (vi) obtained in step b) in order to separately obtain (vii) a purified nitric acid condensate and (viii) nitrogen oxides,
d) absorbing nitrogen oxides (viii) in water to obtain dilute nitric acid (ix) and, optionally
   introducing at least part of the obtained dilute nitric acid (ix) into step a) of the process.

In the inventive process, the decomposition of the nitrosyl sulfuric acid according to step a) takes place in a reaction vessel in contact with water. The water for decomposition is supplied by the dilute nitric acid i) with a concentration of <70 wt.-%, or preferably <60 wt.-% which is added to the mixed acid comprising nitrosyl sulfuric acid and sulfuric acid ii). The decomposition reaction takes place in inversion of equation 3 and is promoted by the dilution heat of the sulfuric acid/mixed acid. The decomposition reaction results in a liquid phase iii) comprising a mixture of sulfuric acid and nitric acid, and a gaseous phase iv) comprising nitrogen oxides.

In a preferred embodiment of the invention, the dilute nitric acid is injected into the mixed acid solution, and a spray nozzle has proven to be advantageous as it provides dispersed droplets. The heat of dilution of the sulfuric acid causes part of the nitric acid to evaporate, discharging NOx components within evolving gas bubbles. A maximum water addition should be aimed for in order to minimize steam consumption and to achieve extensive decomposition before stripping. In preferred embodiments of the invention, the dilute nitric acid is introduced in step a) in an appropriate quantity to dilute the mixed acid ii) to mixture (iii) with a water content of 20 to 40 wt.-%.

In a further preferred embodiment of the invention, the dilute nitric acid (i) to be introduced in step a) is diluted with water to yield the desired water content in the mixture (iii). In especially preferred embodiments of the invention, the concentration of the dilute nitric acid (i) in step a) is below 70 wt.-%, and especially 5 to 65 wt.-%, 10 to 63 wt.% or 20 to 60 wt.-%.

The decomposition reaction is advantageously performed in a corrosion resistant reaction vessel. This reaction vessel can be a separate vessel or a suitable part of a column as used for stripping step b). Preferably, the vessel should be made of lined steel (glass-lining or fluoropolymer-lining). It should have two separate outlets for the gas and liquid phases. The gas phase (iv) consists mainly of NOx and should be fed to condensation in step c) or directly to absorption in step d). The liquid phase (iii) passes into stripping for further removal of the NOx and evaporation of the nitric acid.

Stripping step b) of the inventive process is achieved by adding steam to the liquid phase (iii) obtained in step a). Stripping is usually carried out in a corrosion resistant packed column made of lined steel (glass-lining or fluoropolymer-lining) with borosilicate glass packing. Steam is added in a ratio of 0.05 to 0.35 by mass, preferably 0.10 to 0.25 by mass relative to the feed acid. Preferably, the steam is added countercurrent to the flow of the liquid phase (iii) in the column.

Nitric acid is preferentially vaporized from the three-substance mixture (H₂SO₄-HNO₃-H₂O) during stripping step b). The concentration of the vapor phase depends on the mixing ratio and thus the adjusted nitric acid concentration in the mixture. A sufficiently high concentration of nitric acid in the three-substance mixture allows to surpass the nitric acid-water azeotrope and a high-concentrated nitric acid vapor to be fed into the condensation step c). Optionally, some of the condensed nitric acid obtained by step c) can be fed to the stripping column in step b) to achieve higher concentrations or to wash out traces of sulfuric acid from the vapor.

In step c) of the inventive process, the mixture of nitric acid and nitrogen oxides (vi) obtained in step b), and optionally the gas phase comprising the nitrogen oxides (iv) obtained in step a) is cooled and condensed in order to separately obtain a purified nitric acid condensate (vii) and nitrogen oxides (viii). Depending on the process conditions, step c) results in nitric acid (vii) having a concentration between 60 and up to 100 wt.-%. The cooling and condensing step can be performed either as a direct condensation step (variant A) which yields nitric acid with a concentration of up to 80 wt. %, or as a surface condensation (variant B) for achieving concentration up to 100 wt. %. Both processes are further described in the following:
In variant A, the condensation is performed in a corrosion resistant condenser. To produce nitric acid with a concentration of up to 80 wt.-%, direct condensation of the nitric acid vapors from stripping in a washing column (packed column, tray column or other column) is one suitable option (see **Fehler! Verweisquelle konnte nicht gefunden werden.2**). In such embodiment of the invention, the condensed and cooled nitric acid condensate (vii) is used as the washing solution. The addition/intake of air or oxygen through the washing column also promotes the oxidation of the nitric oxide contained in (viii) to nitrogen dioxide. The heat of reaction is absorbed in the washing solution, thereby reducing the cooling requirements in the following absorption step d). In addition, the addition of air or oxygen already provides a pre-bleaching (stripping of NOx) of the nitric acid. In a preferred embodiment, the pressure in the column is maintained between 0.5 and 3 bar absolute, especially between 0.9 and 1.5 bar absolute.

The washing column should be made of corrosion-resistant material, preferably lined steel (glass-lining or fluoropolymer-lining), but at suitable temperatures and concentrations also stainless steel columns can be used. Ceramic or borosilicate glass packings are suitable as packing. Cooling of the washing solution can be performed with a stainless steel heat exchanger.

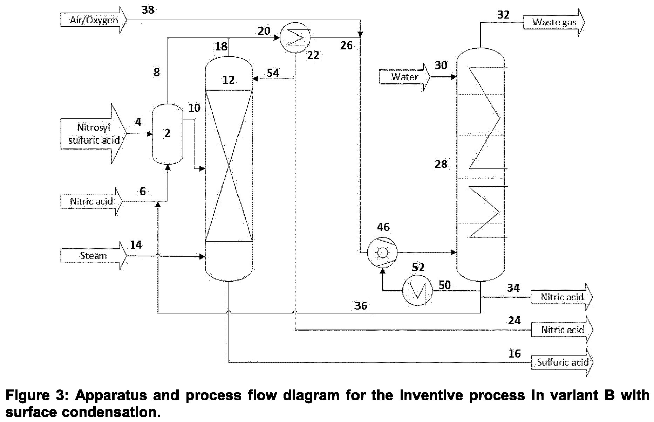

In variant B, for obtaining nitric acid concentrations up to 100 wt.-%, condensation is expediently carried out as a surface condensation (see Fig. 3), preferably in a corrosion-resistant shell-and-tube heat exchanger (shell preferably made of lined steel, tube bundle made of tantalum). For higher concentrations, a part of the condensate can be returned to the stripping column.

Step d) of the inventive process includes absorbing nitrogen oxides (viii) in water to obtain dilute nitric acid (ix). The absorption is generally performed at 0 to 10 bar overpressure (barg), and preferably at medium pressure, e.g. 2 to 7 bar overpressure. The medium pressure absorption column can be designed according to the state of the art. A liquid ring compressor and a tray column can be used advantageously.

In an optional further preferred embodiment of the inventive process, the dilute nitric acid (ix) produced in the absorption step can expediently be used to decompose the nitrosyl sulfuric acid. For this purpose, at least part of the obtained dilute nitric acid (ix) is introduced in step a) and forms at least a part of the dilute nitric acid (i).

Further preferred embodiments include air and/or oxygen addition into step c) and/or step d) in order to promote conversion of nitric oxide to nitrogen dioxide. Best results are achieved by providing a ratio of oxygen to nitrogen in one or both of these steps of 0.1 to 3 by mass, preferably 0.5 to 1.5 by mass based on the nitrogen content of mixed acid (ii). Within the context of cooling of the gas phase according to variant A of step c), air/oxygen is preferably introduced during step c), whereas in the context of variant B of step c), air/oxygen is preferably introduced during step d).

Compared to the prior art, the inventive process for the decomposition of nitrosyl sulfuric acid and for the production of near-azeotropic or high-concentrated nitric acid has decisive advantages. By using diluted nitric acid for dilution and decomposition of nitrosyl sulfuric acid, on the one hand, complete decomposition is achieved and, on the other hand, the nitric acid is dehydrated to achieve concentrations near to or above the azeotropic point. In the described process only low nitric acid concentrations must be achieved by absorption, thus cooling requirements and absorption pressure can be reduced. Therefore, the process leads to a significant simplification and reduced investment/operating costs.

The process is suitable for the treatment of nitrosyl sulfuric acid with varying and highly fluctuating nitrogen contents. The purified sulfuric acid obtained via the inventive process has very low residual nitrogen contents of less than 250 mg/L nitrate and nitrite. It is even possible to achieve residual nitrogen contents of less than 15 mg nitrogen/L (expressed as total nitrogen). Sulfur contents in the recovered nitric acid preferably amount to between 15 and 75 mg sulfur/L (expressed as total sulfur), or even less.

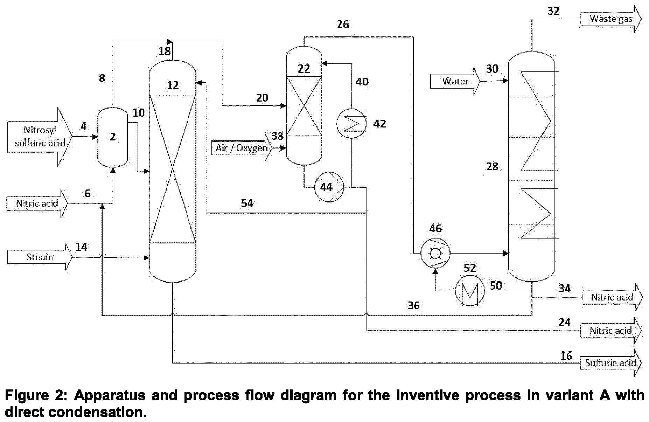

A further aspect of the present invention is an apparatus for performing the inventive process in its various forms and embodiments. Figures 2 and 3 provide process flow diagrams and schematic representations of apparatuses to further illustrate the invention, including instrumental designs and equipment for performing the inventive process in both variants A and B of cooling step c).

More specifically, an apparatus for performing recycling of a mixed acid containing nitrosyl sulfuric acid and sulfuric acid to obtain nitric acid and sulfuric acid, comprises the following components:
a) a reaction vessel 2 for decomposition of a mixed acid comprising nitrosyl sulfuric acid and sulfuric acid, feed lines 4 and 6 for introducing the mixed acid and a dilute nitric acid, respectively, into the reaction vessel 2, and outlet lines 8 and 10 for, after decomposition, discharging gaseous and liquid phases, respectively, from the reaction vessel 2,
b) a stripping column 12 into which the liquid phase from reaction vessel 2 is introduced via line 10, further comprising an inlet line 14 for introducing steam into the stripping column 12, and outlet lines 16 and 18 for discharging purified sulfuric acid and an evaporated mixture of concentrated nitric acid and nitrogen oxides, respectively,
c) a cooler/condenser 22 into which the evaporated mixture of concentrated nitric acid and nitrogen oxides from stripping column 12 and the gaseous phase from reaction vessel 2 are introduced via feed line 20, further comprising outlet lines 24 and 26 for discharging a nitric acid condensate and nitrogen oxides, respectively,
d) an absorption column 28 into which nitrogen oxides obtained in cooler/condenser 22 are introduced via line 26, further comprising inlet line 30 and outlet lines 32 and 34 for discharging waste gas and dilute nitric acid, respectively,
   and optionally further comprises
e) feed line 36 connecting outlet line 34 and inlet line 6 for reintroducing dilute nitric acid into reaction vessel 2.

The various vessels, columns, and lines included by the inventive apparatus are made of materials, which are suitable for use in such context and environment. Suitable materials are well known to the skilled person.

In a preferred embodiment of the present invention, the reaction vessel 2 is designed as a separate vessel made of lined steel, the lining preferably being a glass-lining or a fluoropolymer-lining. In an alternative preferred embodiment, reaction vessel 2 is integrated with the stripping column 12 and, accordingly, items a) and b) of the inventive apparatus are implemented as a combined reaction vessel/stripping column equipment. Also in this second preferred aspect, the part of a column 12, which is provided as a reaction vessel 2, is made of lined steel, again a glass-lining or a fluoropolymer-lining being the material of choice.

In a further preferred embodiment of the present invention, the feed line 6 for introducing dilute nitric acid into vessel 2 feeds a spray nozzle, which allows for introducing dispersed droplets of dilute nitric acid into the mixed acid solution and thus achieves an even better decomposition of nitrosyl sulfuric acid.

Regarding part b) of the inventive apparatus, also the stripping column 12 is generally made from a corrosion resistant material. The stripping column is preferably a packed column consisting of steel lined with glass or a fluoropolymer, and the packing material is preferably made of borosilicate glass.

As outlined above in the detailed description of the inventive process, there are basically two options for performing the cooling/condensing step c) of the inventive process. Accordingly, in preferred embodiments, the inventive apparatus is specifically designed for the two process variants A and B.

Within the context of variant A of the inventive process, it is preferred that the inventive apparatus includes a cooler/condenser 22, which is a corrosion-resistant washing column, preferable a packed column or tray column. The washing column is preferably made of a corrosion-resistant material, which is preferably lined steel, a glass-lining or fluoropolymer-lining again being especially preferred. At suitable temperatures and concentrations also stainless steel columns (without lining) can be used and, accordingly, also represent an embodiment of cooler/condenser 22 of this invention. Ceramic materials or borosilicate glass are suitable as packing.

The cooler/condenser portion c) of the inventive apparatus in further preferred embodiments optionally includes an inlet line 38 for introducing air and/or oxygen into the cooler/condenser. Furthermore, a feed line 40 can be included for reintroducing nitric acid condensate at the top of the cooler/condenser 22 by using the pump 44. In further preferred embodiments, this part c) of the inventive apparatus also includes a heat exchanger 42 in the feed line 40 in order to cool the nitric acid condensate to be reintroduced as washing solution into the washing column. In preferred embodiments of the present invention, heat exchanger 42 is a stainless steel heat exchanger.

In line with variant B of the inventive process, an alternative embodiment of the inventive apparatus includes a surface condenser made from corrosion-resistant material as the cooler/condenser 22. This surface condenser preferably is a shell-and-tube heat exchanger whereby the shell is preferably made of glass- or fluoropolymer-lined steel, and the tube bundle is preferably made of tantalum. Other heat exchanger types (e.g. plate-and-frame heat exchangers) or materials (e.g. silicon carbide) are also suitable.

The absorption column 28 representing part d) of the inventive apparatus can be any medium pressure absorption column according to the state of the art designed for the respective process conditions. In preferred embodiments, the medium pressure absorption column is realized as a tray column. In further preferred embodiments, a liquid ring compressor 46 is included to compress nitrogen oxides in line 26 and optionally also air and/or oxygen provided through line 48 before introduction into absorption column 28.

In further preferred embodiments, the operating fluid for the liquid ring compressor 46 is nitric acid supplied from the absorption column 28 via line 50, which further preferably contains a heat exchanger 52.

In summary, the present invention provides an improved, time- and cost-effective process for recycling of nitrosyl sulfuric acid containing mixed acids and allows to obtain very pure sulfuric acid and highly concentrated nitric acid from such mixed acid waste. Furthermore, the invention provides an apparatus which is useful and specifically designed for conducting the inventive process.

### List of References

[1] R. Gubler, B. Suresh, H. He and Y. Yamaguchi, "Sulfuric Acid," in Chemical Economics Handbook, 2017.
[2] E. G. C. Lyne, A. B. Berryman, C. M. Evans and S. Sampat, "Advances in NOx removal in smelter acid plants," 2002.
[3] G. Schmidt, E. Winkler, H. Wagner, R. Apel, R. Fach, D. Knoblich and P.-B. Stougie, "Process for Removing NOx from Nitrosylsulphuric Acid". Patent WO9802381, 22 01 1998.
[4] P. P. Kim, G. V. Pastukhova and A. A. Peretrutov, "Hydrolysis of Nitrosyl sulfuric Acid," Russian Journal of Applied Chemistry, Vol. 74, No. 1, pp. 167-169, 2001.
[5] R. Miller, "Removal of Nitric Acid from Nitric Acid-Sulfuric Acid Mixtures". Patent US4155989, 22 05 1979.
[6] R. S. Egly and T. Haute, "Process for the Recovery of Nitrogen Oxide". Patent US2543446, 27 02 1951.
[7] P. Kachkaroff and C. Matignon, "Process for the Simultaneous Production of Sulphuric Acid and Nitric Acids". Patent US2053834, 08 09 1936.

As explained in detail above, the present patent application discloses the following items:
1. Process for recycling of a mixed acid containing nitrosyl sulfuric acid and sulfuric acid to obtain nitric acid and sulfuric acid, the process comprising the steps of:
   a) adding (i) a dilute nitric acid containing less than 70 wt.-% nitric acid to (ii) the mixed acid comprising nitrosyl sulfuric acid and sulfuric acid to effect the decomposition of the nitrosyl sulfuric acid and to obtain (iii) a liquid phase comprising a mixture of sulfuric acid and nitric acid and (iv) a gaseous phase comprising nitrogen oxides,
   b) adding steam to the sulfuric acid and nitric acid-comprising liquid phase (iii) obtained in step a) to separate (v) a purified sulfuric acid, and evaporate (vi) a mixture of concentrated nitric acid and nitrogen oxides,
   c) cooling the gas phase comprising the nitrogen oxides (iv) obtained in step a) and the mixture of nitric acid and nitrogen oxides (vi) obtained in step b) in order to separately obtain (vii) a purified nitric acid condensate and (viii) nitrogen oxides,
   d) absorbing nitrogen oxides (viii) in water to obtain dilute nitric acid (ix), and, optionally,
   introducing at least part of the obtained dilute nitric acid (ix) into step a) of the process.
2. Process according to item 1, wherein dilute nitric acid is introduced in step a) in an appropriate quantity to dilute the mixed acid (ii) to mixture (iii) having a water content of 20 to 40 wt.-%.
3. Process according to anyone of items 1 or 2, wherein the dilute nitric acid (i) to be introduced in step a) is optionally diluted with water to yield the desired water content in the mixture (iii).
4. Process according to anyone of items 1 to 3, wherein in step a) the dilute nitric acid has a concentration of less than 70 wt.-%, preferably 5 to 65 wt.-%, more preferably 10 to 63 wt.-% and most preferably 20 to 60 wt%.
5. Process according to anyone of items 1 to 4, wherein step a) is performed in a separate reaction vessel, or in a suitable part of a packed or tray column.
6. Process according to anyone of items 1 to 5, wherein steam is added in step b) to result in a ratio of steam to nitrosyl sulfuric acid-comprising mixed acid (ii) of 0.05 to 0.35 by mass, preferably 0.10 to 0.25 by mass.
7. Process according to anyone of items 1 to 6, wherein step b) is performed in a packed or tray column, and steam is added countercurrent to the flow of the liquid phase (iii) in the column.
8. Process according to anyone of the preceding items, wherein reaction conditions are applied to result in a nitric acid (vii) having a concentration of 60 to 100 wt.-%.
9.. Process according to anyone of items 1 to 8, wherein step c) is performed by direct condensation when mixing with the cooled nitric acid condensate (vii) in a corrosion resistant packed, tray or other column while the pressure is maintained between 0.5 and 3 bar absolute, preferably between 0.9 and 1.5 bar absolute.
10. Process according to anyone of items 1 to 8, wherein step c) is performed by surface condensing in or at corrosion resistant tubes or plates.
11. Process according to anyone of the preceding items, wherein step d) production of a dilute nitric acid (ix) is performed at a pressure of 0 to 10 barg overpressure, preferably 2 to 7 bar overpressure.
12. Process according to anyone of the preceding items, wherein part of the purified nitric acid (vii) is reintroduced to step b).
13. Process according to anyone of the preceding items, wherein air and/or oxygen is introduced into step c) or d) in order to convert nitric oxide to nitrogen dioxide.
14. Process according to item 13, wherein air and/or oxygen is introduced in steps c) or d) in an amount to provide a ratio of oxygen to the nitrogen content of mixed acid (ii) of 0.1 to 3, preferably 0.5 to 1.5 by mass.
15. Apparatus for the recycling of a mixed acid comprising nitrosyl sulfuric acid and sulfuric acid to obtain nitric acid and sulfuric acid, the apparatus comprising the following components:
   a) a reaction vessel (2) for decomposition of a mixed acid comprising nitrosyl sulfuric acid and sulfuric acid, feed lines (4) and (6) for introducing the mixed acid and a dilute nitric acid, respectively, into the reaction vessel (2), and outlet lines (8) and (10) for, after decomposition, discharging gaseous and liquid phases from the reaction vessel (2),
   b) a stripping column (12) into which the liquid phase from reaction vessel (2) is introduced via line (10) and further comprising an inlet line (14) for introducing steam into the stripping column (12), and outlet lines (16) and (18) for discharging purified sulfuric acid and an evaporated mixture of concentrated nitric acid and nitrogen oxides, respectively,
   c) a cooler/condenser (22) into which the evaporated mixture of concentrated nitric acid and nitrogen oxides from stripping column (12) and, optionally, the gaseous phase from reaction vessel (2) are introduced via feed line (20), and further comprising and outlet lines (24) and (26) for discharging a nitric acid condensate and gaseous nitrogen oxides, respectively,
   d) an absorption column (28) into which nitrogen oxides obtained in cooler/condenser (22) are introduced via line (26), further comprising inlet line (30) and outlet lines (32) and (34) for discharging waste gas and dilute nitric acid, respectively, and
   optionally further comprising
   a feed line (36) connecting outlet line (34) and inlet line (6) for reintroducing dilute nitric acid into reaction vessel (2).
16. The apparatus according to item 15, wherein reaction vessel (2) is a separate vessel or a suitable part of column (12) and is made of lined steel (glass-lining or fluoropolymer-lining).
17. The apparatus according to anyone of items 15 or 16, wherein stripping column (12) is a packed column, preferably made of lined steel (glass-lining or fluoropolymer-lining) comprising a borosilicate glass packing.
18. The apparatus according to anyone of items 15 to 17, wherein the cooler/condenser (22) is a corrosion resistant washing column, preferably a packed or tray column, which optionally further includes an inlet line (38) for introducing air or oxygen into the cooler/condenser, and/or a feed line (40) for reintroducing nitric acid condensate at the top of the cooler/condenser (22) preferably additionally including a heat exchanger (42) and a pump (44).
19. The apparatus according to anyone of items 15 to 17, wherein the cooler/condenser (22) is a corrosion resistant surface condenser, preferably a shell-and-tube heat exchanger, especially preferably wherein the shell is made of lined steel (glass-lining or fluoropolymer-lining) and the tube bundle is made of tantalum.
20. The apparatus according to anyone of items 15 to 19, wherein the absorption column (28) is a tray column and the apparatus further comprises a liquid ring compressor (46) to compress nitrogen oxides in line (26), and optionally also compresses air or oxygen provided with line (48), before introduction into absorption column (28).

## Claims

1. Process for recycling of a mixed acid containing nitrosyl sulfuric acid and sulfuric acid to obtain nitric acid and sulfuric acid, the process comprising the steps of:
a) adding (i) a dilute nitric acid containing less than 70 wt.-% nitric acid to (ii) the mixed acid comprising nitrosyl sulfuric acid and sulfuric acid to effect the decomposition of the nitrosyl sulfuric acid and to obtain (iii) a liquid phase comprising a mixture of sulfuric acid and nitric acid and (iv) a gaseous phase comprising nitrogen oxides,
b) adding steam to the sulfuric acid and nitric acid-comprising liquid phase (iii) obtained in step a) to separate (v) a purified sulfuric acid, and evaporate (vi) a mixture of concentrated nitric acid and nitrogen oxides,
c) cooling the gas phase comprising the nitrogen oxides (iv) obtained in step a) and the mixture of nitric acid and nitrogen oxides (vi) obtained in step b) in order to separately obtain (vii) a purified nitric acid condensate and (viii) nitrogen oxides,
d) absorbing nitrogen oxides (viii) in water to obtain dilute nitric acid (ix), and,
optionally,
introducing at least part of the obtained dilute nitric acid (ix) into step a) of the process.

2. Process according to claim 1, wherein dilute nitric acid (i) is introduced in step a) in an appropriate quantity to dilute the mixed acid (ii) to mixture (iii) having a water content of 20 to 40 wt.-%, optionally wherein the dilute nitric acid (i) to be introduced in step a) is diluted with water to yield the desired water content in the mixture (iii), and preferably wherein in step a) the dilute nitric acid has a concentration of less than 70 wt.-%, preferably 5 to 65 wt.-%, more preferably 10 to 63 wt.-% and most preferably 20 to 60 wt%.

3. Process according to anyone of claims 1 or 2, wherein step a) is performed in a separate reaction vessel, or in a suitable part of a packed or tray column and/or wherein step b) is performed in a packed or tray column, and steam is added countercurrent to the flow of the liquid phase (iii) in the column.

4. Process according to anyone of claims 1 to 3, wherein steam is added in step b) to result in a ratio of steam to nitrosyl sulfuric acid-comprising mixed acid (ii) of 0.05 to 0.35 by mass, preferably 0.10 to 0.25 by mass.

5. Process according to anyone of the preceding claims, wherein reaction conditions are applied to result in a nitric acid (vii) having a concentration of 60 to 100 wt.-%.

6. Process according to anyone of claims 1 to 5, wherein step c) is performed by direct condensation when mixing with the cooled nitric acid condensate (vii) in a corrosion resistant packed, tray or other column while the pressure is maintained between 0.5 and 3 bar absolute, preferably between 0.9 and 1.5 bar absolute, or wherein step c) is performed by surface condensing in or at corrosion resistant tubes or plates.

7. Process according to anyone of the preceding claims, wherein step d) production of a dilute nitric acid (ix) is performed at a pressure of 0 to 10 barg overpressure, preferably 2 to 7 bar overpressure.

8. Process according to anyone of the preceding claims, wherein part of the purified nitric acid (vii) is reintroduced to step b).

9. Process according to anyone of the preceding claims, wherein air and/or oxygen is introduced into step c) or d) in order to convert nitric oxide to nitrogen dioxide.

10. Process according to claim 9, wherein air and/or oxygen is introduced in steps c) or d) in an amount to provide a ratio of oxygen to the nitrogen content of mixed acid (ii) of 0.1 to 3, preferably 0.5 to 1.5 by mass.

11. Apparatus for the recycling of a mixed acid comprising nitrosyl sulfuric acid and sulfuric acid to obtain nitric acid and sulfuric acid, the apparatus comprising the following components:
a) a reaction vessel (2) for decomposition of a mixed acid comprising nitrosyl sulfuric acid and sulfuric acid, feed lines (4) and (6) for introducing the mixed acid and a dilute nitric acid, respectively, into the reaction vessel (2), and outlet lines (8) and (10) for, after decomposition, discharging gaseous and liquid phases from the reaction vessel (2),
b) a stripping column (12) into which the liquid phase from reaction vessel (2) is introduced via line (10) and further comprising an inlet line (14) for introducing steam into the stripping column (12), and outlet lines (16) and (18) for discharging purified sulfuric acid and an evaporated mixture of concentrated nitric acid and nitrogen oxides, respectively,
c) a cooler/condenser (22) into which the evaporated mixture of concentrated nitric acid and nitrogen oxides from stripping column (12) and, optionally, the gaseous phase from reaction vessel (2) are introduced via feed line (20), and further comprising and outlet lines (24) and (26) for discharging a nitric acid condensate and gaseous nitrogen oxides, respectively,
d) an absorption column (28) into which nitrogen oxides obtained in cooler/condenser (22) are introduced via line (26), further comprising inlet line (30) and outlet lines (32) and (34) for discharging waste gas and dilute nitric acid, respectively, and
optionally further comprising
a feed line (36) connecting outlet line (34) and inlet line (6) for reintroducing dilute nitric acid into reaction vessel (2).

12. The apparatus according to claim 11, wherein reaction vessel (2) is a separate vessel or a suitable part of column (12) and is made of lined steel (glass-lining or fluoropolymer-lining).

13. The apparatus according to anyone of claims 11 or 12, wherein stripping column (12) is a packed column, preferably made of lined steel (glass-lining or fluoropolymer-lining) comprising a borosilicate glass packing.

14. The apparatus according to anyone of claims 11 to 13, wherein the cooler/condenser (22) is a corrosion resistant washing column, preferably a packed or tray column, which optionally further includes an inlet line (38) for introducing air or oxygen into the cooler/condenser, and/or a feed line (40) for reintroducing nitric acid condensate at the top of the cooler/condenser (22) preferably additionally including a heat exchanger (42) and a pump (44), or wherein the cooler/condenser (22) is a corrosion resistant surface condenser, preferably a shell-and-tube heat exchanger, especially preferably wherein the shell is made of lined steel (glass-lining or fluoropolymer-lining) and the tube bundle is made of tantalum.

15. The apparatus according to anyone of claims 11 to 14, wherein the absorption column (28) is a tray column and the apparatus further comprises a liquid ring compressor (46) to compress nitrogen oxides in line (26), and optionally also compresses air or oxygen provided with line (48), before introduction into absorption column (28).
